# EUROPÄISCHE PATENTSCHRIFT

(11) **EP 1 103 402 B1**
(45) Veröffentlichungstag und Bekanntmachung des Hinweises auf die Patenterteilung: **18.06.2008**
(21) Anmeldenummer: 00124403.7
(22) Anmeldetag: 08.11.2000
(51) Int. Cl.: B60J 7/12

(54) **Cabriolet-Verdeck**
Foldable top for convertible vehicle
Capote pliante pour véhicule convertible

(30) Priorität: 26.11.1999 DE 19957049
(43) Veröffentlichungstag der Anmeldung: 30.05.2001
(73) Patentinhaber: PARAT Automotive Schönenbach GmbH + Co. KG, 42897 Remscheid (DE); Bayerische Motoren Werke Aktiengesellschaft, 80788 München (DE); Edscha Cabrio-Verdecksysteme GmbH, 94491 Hengersberg (DE)
(72) Erfinder: Kasparak, Manfred, 94089 Neureichenau (DE); Seibold, Josef, 94089 Neureichenau (DE); Dangl, Wolfgang, 84048 Mainburg (DE); Demmel, Dieter, 86929 Penzing (DE); Reitinger, Andreas, 94339 Coblfing (DE); Märkl, Markus, 84130 Dingolfing (DE)
(74) Vertreter: Ostriga, Sonnet, Wirths & Roche

(56) Entgegenhaltungen:
- EP-A- 0 806 313
- DE-A- 4 234 811
- DE-C- 4 442 458

## Beschreibung

Die Erfindung bezieht sich auf ein Cabriolet-Verdeck, dessen Bezug an den Unterkanten seiner seitlichen Ränder mit einem nach außen abstehenden, regenrinnenartigen Vorsprung in Form eines am Verdeckstoff befestigten Profilstrangs aus elastischem Material versehen ist.

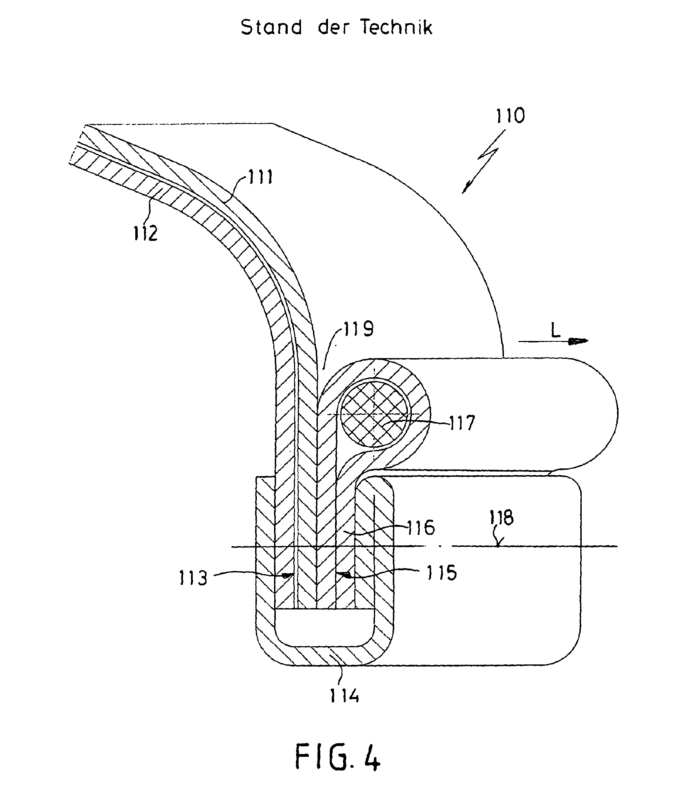

Ein derartiges Cabriolet-Verdeck ist bekannt und bezüglich der Ausgestaltung des regenrinnenartigen Vorsprungs in Fig.4 der vorliegenden Anmeldung dargestellt. Dort ist Verdeckbezug 110 mit einer äußeren Lage 111 und einer inneren Lage 112 dargestellt. Der nach unten weisende seitliche Randbereich 113 ist mit einem im wesentlichen U-förmigen Einfassband 114 versehen, welches die Randkanten 113 des Verdeckstoffs 110 und den Rand 115 eines Einfassbandes 116 umfasst. Das Einfassband 116 schließt eine aus Moosgummi bestehende Schnur 117 ein. Die genannten Teile sind entlang der schematisch angedeuteten Linie 118 miteinander vernäht.

Die Rundschnur 117, die in dem Einfassband 116 eingeschlossen ist, bildet eine sich in Fahrzeuglängsrichtung L erstreckende Wulst aus. Zwischen dieser und der Außenfläche der äußeren Verdeckstofflage 111 verbleibt eine keilförmige Regenrinne 119. Diese Rinne 119 ist dazu bestimmt, vom Verdeck 110 herablaufendes Wasser aufzufangen und in Fahrzeuglängsrichtung abzuleiten.

Ein Vorteil dieser bekannten Anordnung, die in ähnlicher Form auch in DE 42 34 811 A1 beschrieben ist, besteht in dem optisch gefälligen Erscheinungsbild. Die Wasserabfuhr dieser regenrinnenartigen Einrichtung ist allerdings verbesserungsbedürftig, insbesondere, wenn es darum geht, beim Öffnen der darunter befindlichen Tür oder des Fensters nicht von herablaufendem Schwallwasser getroffen zu werden.

Dokument EP 0 806 313 beschreibt ein Cabriolet-Verdeck gemäß dem Oberbegriff des Anspruchs 1.

Der vorliegenden Erfindung liegt mithin die Aufgabe zugrunde, ein Cabriolet-Verdeck der eingangs vorausgesetzten Art hinsichtlich der Regenrinne zu verbessern. Dabei wird insbesondere Wert gelegt auf eine gute Wasserabfuhr, geringe Verschmutzungsanfälligkeit, ein optisch ansprechendes Erscheinungsbild und auch darauf, dass sich die Regenrinnenanordnung, ohne bleibend zu verformen, den Faltbewegungen des Verdecks beim Öffnen und Schließen gut anpassen kann.

Erfindungsgemäß wird diese Aufgabe durch die im Kennzeichnenden Teil des Patentanspruches 1 genannten Merkmale gelöst.

Damit kann bei kaum unverändertem optischem Erscheinungsbild mittels des zwischengelagerten Rinnenprofils eine Profilrinnenverbreiterung erreicht werden kann, die eine größere Wassermenge abzutransportieren in der Lage ist. Durch geschickte Gestaltung der Rinne des Rinnenprofils kann, wie weiter unten ausgeführt, auch dauerhaften Verschmutzungen besser vorgebeugt werden.

Insbesondere wenn das Rinnenprofil ein Spritzgieß- oder Extrusionsprofil aus einem elastischen Kunststoff wie EPDM mit einer relativ geringen Härte von beispielsweise 60-70 Shore-A besteht, genügt dieses in hervorragender Weise den Anforderungen hoher Flexibilität und Anpassungsfähigkeit an die Verformungen, die mit dem Öffnen und Verschließen des Verdecks und damit verbundenen Faltvorgängen einhergehen.

Nach einer weiteren Ausgestaltung der Erfindung ist die Rinne des Rinnenprofils keilförmig ausgebildet mit einem Keilwinkel von etwa 25 bis 30°. Hierin wird eine wirksame Maßnahme gegen dauerhafte Verschmutzungen innerhalb der Rinne gesehen. Das elastische Profil, welches sich zumindest beim Öffnen und Schließen des Verdecks flexibel deformieren und wieder rückverformen kann, ist in der Lage, in der Rinne haftende Schmutzpartikel aufgrund der Keilform der Rinne freizusprengen.

Von Vorteil ist es auch, wenn entsprechend einem weiteren Merkmal der Erfindung das Rinnenprofil insbesondere in seinem die Rinne bildenden Bereich eine glatte Oberfläche aufweist. Dadurch kann das Wasser einerseits besser ablaufen, andererseits ist eine glatte Oberfläche weniger zur Ablagerung von Verunreinigungen geeignet als eine rauhe Oberfläche. Der eingangs in Bezug genommene und in Fig. 4 dargestellte Stand der Technik hatte eine solche rauhe Oberfläche im Regenrinnenbereich, weil sowohl der Verdeckstoff ein Gewebe ist als auch das Einfassband des Profilstrangs.

Ein weiteres Merkmal besteht darin, dass das Rinnenprofil eine Höhe aufweist, die die des Profilstrangs nicht überschreitet. Damit wird gewährleistet, dass das Rinnenprofil dem gesamten Randkantenbereichs praktisch kein anderes, vor allem kein schlechteres Aussehen verleiht gegenüber dem bisher bekannten, ästhetisch als einwandfrei bezeichneten Verdeck.

Bezüglich der Befestigung ist es vorteilhaft, wenn der Verdeckstoffrand, der Profilstrang mit seinem Einfassband sowie das Rinnenprofil mittels eines gemeinsamen, kantenumgreifenden Einfassbandes aneinander befestigt sind. Diese Befestigung entspricht weitgehend der üblichen, wie sie anhand von Fig. 4 beim Stand der Technik beschrieben ist. Im Unterschied dazu ist nunmehr zwischen Verdeckstoff und dem Einfassband des Profilstrangs das erfindungsgemäße Rinnenprofil eingelagert.

Der zum Verdeckstoff weisende Schenkel des Rinnenprofils ist entsprechend einem weiteren Erfindungsmerkmal im nicht eingebauten Zustand nach außen von einem Profilsteg weg abgespreizt, um im eingebauten Zustand vorgespannt über seine gesamte Höhe hinweg im wesentlichen ebenflächig am Verdeckstoff anzuliegen. Abgesehen davon, dass das dichte Anliegen einen wesentlichen Beitrag zur Wasserdichtigkeit der gesamten Anordnung liefert, ist die Rückstellkraft wichtig, die aufgrund der Vorspannung des abgespreizten Profilsteges im eingebauten Zustand aufrechterhalten wird. Gewährleistet ist dabei vor allem das Offenbleiben der Wasserablauf-Rinne im Rinnenprofil.

Im übrigen versteht sich die Erfindung am besten anhand der nachfolgenden Beschreibung eines in den Zeichnungen (Fig. 1 bis 3) dargestellten Ausführungsbeispiels. Darin zeigen:
- Fig. 1: eine schematische schaubildliche Darstellung eines Cabriolet-Verdecks,
- Fig. 2: einen Schnitt entsprechend der Schnittlinie II-II in Fig. 1 und
- Fig. 3: einen Querschnitt durch das Rinnenprofil im noch nicht eingebauten Zustand.

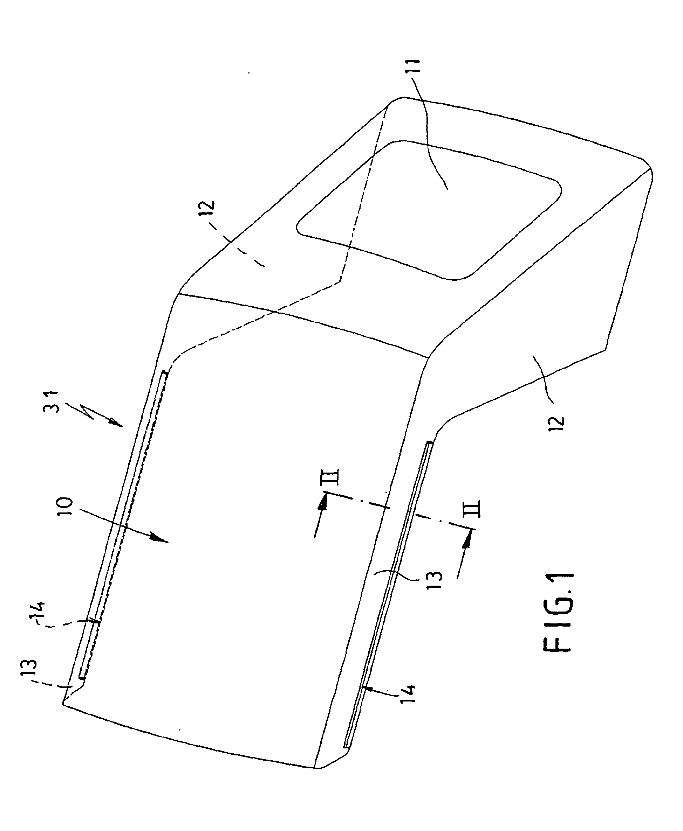

Das insgesamt mit 31 bezeichnete Cabriolet-Verdeck in Fig. 1 weist einen in der Regel mindestens zweilagigen Verdeckstoff 10 auf, in dessen rückwärtiger Partie eine Heckscheibe 11 eingearbeitet ist. Mit 12 sind die hinteren Seitenteile des Cabriolet-Verdecks bezeichnet, die zur Fahrzeugfront hin in schmale, seitlich herab hängende Abschnitte 13 übergehen. Diese seitlichen Abschnitte 13 erstrecken sich zwischen dem Windschutzscheibenrahmen, der sogenannten A-Säule, und reichen bei einem Roadster hinter die Fahrertürscheibe bzw. bei einem Viersitzer häufig bis zur C-Säule, die bei einem Cabriolet-Verdeck durch einen von den Seitenteilen 12 abgedeckten Spriegel ausgebildet ist.

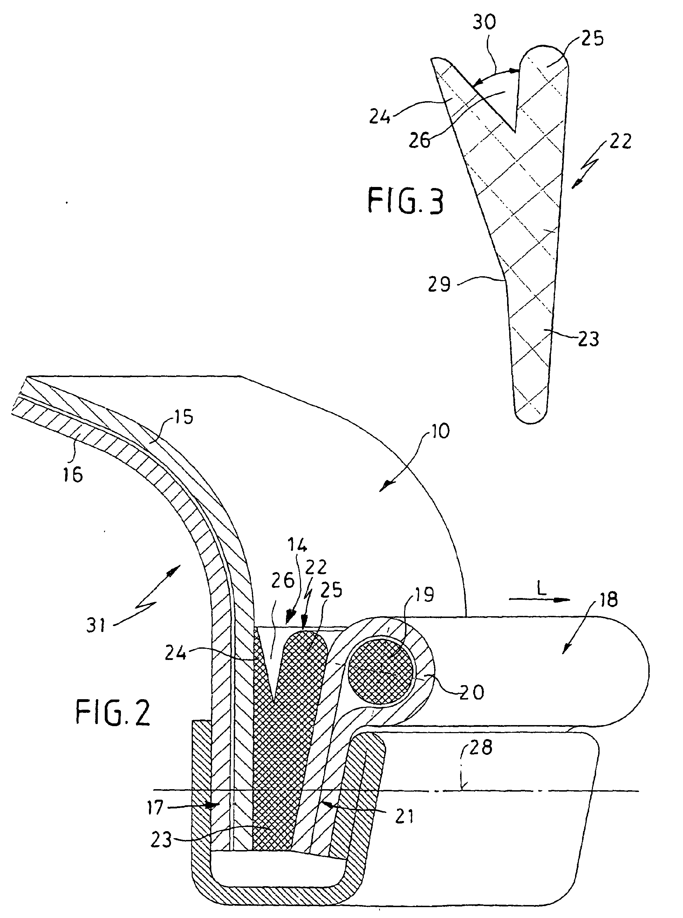

Zum weiteren Verständnis ist es wichtig, dass sich im Bereich der Seitenteile 13 zu jeder Seite des Verdecks in Längsrichtung des Fahrzeugs eine Regenrinne 14 erstreckt. Deren erfindungsgemäße Anordnung und Ausgestaltung sei nun anhand der Fig. 2 beschrieben.

In Fig. 2 sind vom Verdeckstoff 10 die Außenlage 15 und die Innenlage 16 gezeigt, die seitlich und nach unten hin in einen gemeinsamen Längsrandbereich 17 enden. Mit 18 ist ein Profilstrang bezeichnet, der sich in Längsrichtung der Randkante 17 des Verdeckstoffs 10 sowie auch in Längsrichtung L des Fahrzeugs erstreckt. Eine z.B. aus Moosgummi bestehende Schnur 19 ist von einem Einfassband 20 umfasst, welches Fahnen aufweist, die in Randbereiche 21 münden, die parallel und im wesentlichen deckungsgleich zu den Randbereichen 17 des Verdeckstoffs angeordnet werden. Zwischen den Randbereichen 17 des Verdeckstoffs 10 und 21 der Profilstrang-Einfassung 20 ist erfindungsgemäß ein Rinnenprofil 22 aus Kunststoff angeordnet.

Wie aus Fig. 2 ersichtlich ist, ist die Höhe dieses Rinnenprofils im wesentlichen gleich der Höhe des Profilstrangs 18, vorzugsweise jedoch etwas geringer. Im Querschnitt der Fig. 2 umfasst es einen Profilsteg 23 sowie zwei Schenkel 24 und 25. Zwischen den Schenkeln 24 und 25 befindet sich eine nach oben hin sich öffnende Keilrinne 26. Diese Keilrinne 26 ist zum Verdeckstoff 10 durch den keilförmig sich nach oben hin verjüngenden Schenkel 24 und zum Profilstrang 18 hin durch den etwas dickeren Schenkel 25 begrenzt. Die Innenflächen der Keilränder 26, also die dortigen Oberflächen des Rinnenprofils 22 sind glattflächig.

Der keilförmige Schenkel 24 läuft in einem spitzen Winkel von etwa 27° aus, so dass er im wesentlichen vorsprungsfrei in die Oberfläche des Verdeckstoffs 10 einmündet. Beim Übergang vom Verdeckstoff 10 zur Innenseite des Schenkels 24 des Rinnenprofils 22 bildet sich also kein Versatz.

Die Einzelteile der Anordnung, also die Randbereiche 17 des Verdeckstoffs 10, die randlichen Enden 21 des Einfassbandes 20 der Gummischnur 19 und der Steg 23 des Rinnenprofils 22 werden aneinander befestigt mittels eines den gesamten Randbereich umgreifenden Einfassbandes 27 aus Kunststoff oder textilem Material. Die mit 28 bezeichnete Linie deutet schematisch an, dass hier eine alle Teile durchsetzende Naht vorgesehen ist.

Fig. 3 zeigt - etwa im Maßstab 10:1 - das Rinnenprofil in noch nicht eingebautem Zustand und läßt erkennen, dass ab einer im Bereich oder nahe der Naht 28 gelegenen Stelle 29 der keilförmige Schenkel 24 nach außen abgespreizt ist. Der zwischen den Schenkeln 24 und 25 befindliche Keilwinkel 30 ist wesentlich größer als im eingebauten Zustand. Aufgrund dieser Konfiguration wird im eingebauten Zustand nach Fig. 2 eine nach außen wirkende Vorspannkraft vom Rinnenprofil 22, insbesondere von seinem Keilschenkel 24 ausgeübt. Erreicht wird dadurch vor allem, dass die an die Außenseite des Verdeckstoffs 10 sich anlegende Fläche des Rinnenprofils 22 eine möglichst glattflächige und ebene Anlage erfährt und dass das Rinnenprofil 22 im Bereich der Schenkel 24 und 25 stets unter einer den Keilraum 26 offen haltenden Vorspannung steht.

## Patentansprüche

1. Cabriolet-Verdeck (31), dessen Bezug an den Unterkanten seiner seitlichen Ränder mit einem nach außen abstehenden, regenrinnenartigen Vorsprung in Form eines am Verdeckstoff (10) befestigten Profilstrangs (18) aus elastischem Material versehen ist, **dadurch gekennzeichnet, dass** zwischen dem Verdeckstoff (10) und dem Profilstrang (18) ein den Profilstrang (18) vom Verdeckstoff (10) abspreizendes Rinnenprofil (22) angebracht ist.

2. Verdeck nach Anspruch 1, **dadurch gekennzeichnet, dass** das Rinnenprofil (22) ein Spritzgieß- oder Extrusionsprofil aus einem elastischen Kunststoff wie EPDM ist.

3. Verdeck nach Anspruch 1 oder 2, **gekennzeichnet durch** eine Härte des Rinnenprofils (22) von etwa 60 bis 70 Shore-A.

4. Verdeck nach einem der Ansprüche 1 bis 3, **dadurch gekennzeichnet, dass** die Rinne (26) des Rinnenprofils (22) keilförmig ausgebildet ist mit einem Keilwinkel von etwa 25 bis 30°.

5. Verdeck nach Anspruch 1 oder einem der darauf folgenden, **dadurch gekennzeichnet, dass** das Rinnenprofil (22) im eingebauten Zustand mit seinem zum Verdeckstoff (10) weisenden Keilschenkel (24) ebenflächig an diesem anliegt und einen Spitzenwinkel von etwa 10 bis 15° ausbildet.

6. Verdeck nach einem der vorhergehenden Ansprüche, **dadurch gekennzeichnet, dass** das Rinnenprofil (22) insbesondere in seinem die Rinne (26) bildenden Bereich eine glatte Oberfläche aufweist.

7. Verdeck nach einem der vorherigen Ansprüche, **dadurch gekennzeichnet, dass** das Rinnenprofil (22) eine Höhe aufweist, die die des Profilstrangs (18) nicht überschreitet.

8. Verdeck nach einem der Ansprüche 1 bis 7, **dadurch gekennzeichnet, dass** der Verdeckstoffrand (17), der Profilstrang (18) mit einem eigenen Einfassband (20) sowie das Rinnenprofil (22), unter Anordnung eines gemeinsamen, kantenumgreifenden Einfassbandes (27) aneinander befestigt sind.

9. Verdeck nach einem der Ansprüche 1 bis 8, **dadurch gekennzeichnet, dass** der zum Verdeckstoff (10) weisende Schenkel (24) des Rinnenprofils (22) im nicht eingebauten Zustand nach außen von einem Profilsteg (23) weg abgespreizt ist, um im eingebauten Zustand vorgespannt über seine gesamte Höhe hinweg im wesentlichen ebenflächig am Verdeckstoff (10) anzuliegen.

## Claims

1. Convertible top (31), the cover of which is provided on the lower rims of its lateral edges with an outwardly protruding gutter-like projection in the form of a profile strip (18) which is made of a resilient material and fastened to the material of the top (10), **characterised in that** a channel profile (22) spreading the profile strip (18) apart from the material of the top (10) is attached between the material of the top (10) and the profile strip (18).

2. Top according to claim 1, **characterised in that** the channel profile (22) is an injection-moulded or extrusion profile made of a resilient plastics material such as EPDM.

3. Top according to either claim 1 or claim 2, **characterised by** a hardness of the channel profile (22) from approximately 60 to 70 Shore A.

4. Top according to any one of claims 1 to 3, **characterised in that** the channel (26) of the channel profile (22) is wedge-shaped in its configuration with a wedge angle from approximately 25 to 30°.

5. Top according to claim 1 or any one of the subsequent claims, **characterised in that** the channel profile (22) rests, when fitted, flat, with its wedge-shaped arm (24) pointing toward the material of the top (10), on said material and forms an acute angle from approximately 10 to 15°.

6. Top according to any one of the preceding claims, **characterised in that** the channel profile (22) has a smooth surface, in particular in the region thereof forming the channel (26).

7. Top according to any one of the preceding claims, **characterised in that** the channel profile (22) has a height not exceeding that of the profile strip (18).

8. Top according to any one of claims 1 to 7, **characterised in that** the edge of the material of the top (17), the profile strip (18) having its own trim (20) and the channel profile (22) are fastened to one another with the arrangement of a common, rim-surrounding trim (27).

9. Top according to any one of claims 1 to 8, **characterised in that** the arm (24), pointing toward the material of the top (10), of the channel profile (22) is, when not fitted, spread outward away from a profile web (23) in order to rest, when fitted, substantially flat against the material of the top (10) with biasing over the entire height thereof.

## Revendications

1. Capote pliante (31) pour véhicule convertible, dont le revêtement est muni, sur les arêtes inférieures de ses bords latéraux, d'une saillie du genre d'une gouttière, faisant saillie vers l'extérieur, réalisée sous la forme d'un boudin profilé (18) en matériau élastique, fixé au matériau de capote (10), **caractérisée en ce qu'**un profilé formant goulotte (22), produisant un écartement entre le boudin profilé (18) et le matériau de capote (10), est monté entre le matériau de capote (10) et le boudin profilé (18).

2. Capote pliante selon la revendication 1, **caractérisée en ce que** le profilé formant goulotte (22) est un profilé de moulage par injection ou un profilé d'extrusion, réalisé en une matière synthétique élastique, telle que de l'EPDM.

3. Capote pliante selon la revendication 1 ou 2, **caractérisée par** une dureté du profilé formant goulotte (22) d'environ 60 à 70 Shore A.

4. Capote pliante selon la revendication 1 à 3, **caractérisée en ce que en ce que** la goulotte (26) du profilé formant goulotte (22) est conformée en coin, avec un angle de coin d'environ 25 à 30°.

5. Capote pliante selon la revendication 1 ou l'une des revendications suivantes, **caractérisée en ce que** le profilé formant goulotte (22), à l'état monté, appuie, avec sa branche de coin (24) tournée vers le matériau de capote (10), sur une surface plane, sur celle-ci et fait un angle de pointe d'environ 10 à 15°.

6. Capote pliante selon l'une des revendications précédentes, **caractérisée en ce que** le profilé formant goulotte (22) présente, en particulier dans sa zone formant la goulotte (26), une surface lisse.

7. Capote pliante selon l'une des revendications précédentes, **caractérisée en ce que** le profilé formant goulotte (22) présente une hauteur ne dépassant pas celle du boudin profilé (18).

8. Capote pliante selon l'une des revendications 1 à 7, **caractérisée en ce que** le bord de matériau de capote (17), le boudin profilé (18) comprenant une bande d'enchâssement (20) propre, ainsi que le profilé formant goulotte (22), sont fixés les uns aux autres avec agencement d'une bande d'enchâssement (27) commune entourant les arêtes.

9. Capote pliante selon l'une des revendications 1 à 8, **caractérisée en ce que** la branche (24), tournée vers le matériau de capote (10), du profilé formant goulotte (22), à l'état non monté, est écartée en s'éloignant d'une nervure de profilé (23) et, à l'état monté, est en appui, sous précontrainte, sur la totalité de sa hauteur, essentiellement avec une surface plane, sur le matériau de capote (10).
